# EUROPÄISCHE PATENTSCHRIFT

(11) **EP 0 608 450 B1**
(45) Veröffentlichungstag und Bekanntmachung des Hinweises auf die Patenterteilung: **10.08.1994**
(21) Anmeldenummer: 93101164.7
(22) Anmeldetag: 27.01.1993
(51) Int. Cl.: A01G 1/00

(54) **Verfahren zum Herstellen einer trägerlosen Vegetationsmatte, insbesondere zur Dachbegrünung**
Method of fabricating an unsupported plant mat, especially for roof turfing
Procédé de fabrication d'un tapis de gazon non-supporté, en particulier pour engazonnement de toit

(43) Veröffentlichungstag der Anmeldung: 03.08.1994
(73) Patentinhaber: AKTUAL BAUTEILE UND UMWELTSCHUTZSYSTEME GmbH & Co. KG, D-25436 Tornesch (DE)
(72) Erfinder: Lösken, Gilbert, Dipl.-Ing., W-2082 Uetersen (DE)
(74) Vertreter: Fleck, Thomas, Dr. Dipl.-Chem.

(56) Entgegenhaltungen:
- WO-A-92/05690
- DE-A- 2 645 230
- DE-C- 3 805 069

## Beschreibung

Die Erfindung betrifft ein Verfahren zum Herstellen einer trägerlosen Vegetationsmatte, insbesondere zur Dachbegrünung, nach dem Oberbegriff des Anspruches 1.

Ein solches Verfahren ist im Stand der Technik in unterschiedlichsten Ausführungsformen bekannt. Danach wird auf einer entsprechend großen, vorbearbeiteten Freilandfläche, Rasen in üblicher Weise gesät und gezüchtet, bis sich eine starke Grasnarbe gebildet hat. Anschließend wird der Fertigrasen maschinell in Bahnen geschnitten, aufgerollt und zum endgültigen Verwendungsort transportiert. Solche Rollrasen oder manuell abgestochene Rasensoden lassen jedoch in mehrfacher Hinsicht zu wünschen übrig:
Erstens ist das manuelle Abstechen ungenau und führt in den Randbereichen zu Fehlstellen und ungleichmäßigen Fugen, zweitens ergeben sich Beeinträchtigungen beim Transport und der Lagerung durch die Druckbelastung und den Luftabschluß im aufgerollten Zustand, was nach wenigen Tagen zu beträchtlichen Schäden führt;
drittens ist es besonders nachteilig, daß sich nicht so intensiv wurzelnde Pflanzenarten, wie z.B. sukkulente Arten (Sedum) nicht trägerlos zusammenhängend herstellen, transportieren und verlegen lassen. Vielmehr brechen sie äußerst leicht auseinander. So wird deshalb auch schon in der DE-A-1 801 460 ein bahnenförmiges, durchbrochenes Trägermaterial aus Kunststoff für den Rollrasen gefordert. Auch in der neueren Literatur werden deshalb die unterschiedlichsten Trägermaterialien gefordert.
Im Buch Grundlagen der Dachbegrünung von Liesecke u.a., 1989, wird in Kapitel 10 - Begrünungsverfahren und Pflege -unter 10.1.4 der heutige Stand der Technik von Vegetationsmatten beschrieben.

Die Richtlinien für Dachbegrünungen der Forschungsgesellschaft Landschaftsentwicklung Landschaftsbau (FLL); Ausgabe 1990, ist im Bereich der Dachbegrünung das Regelwerk, das den derzeitigen Stand der Technik vorgibt. Dort heißt es unter 10.2.7 Vegetationsmatten: "Vegetationsmatten müssen für Anzucht, Transport, Verlegung und Verwendungszweck aus geeigneten Trägereinlagen bestehen ...".

Im Buch Dachbegrünung von Bernd Krupka, in der Reihe Handbuch des Landschaftsbaus, Eugen Ulmer Verlag, 1992, werden in Abschnitt 16.3 Vegetationsmatten abgehandelt.

In allen drei Veröffentlichungen werden Vegetationsmatten ausführlich beschrieben. Demnach wird nach dem heutigen Stand der Technik eine Vegetationsmatte dadurch gekennzeichnet, daß sie für Anzucht, Transport und Verlegung eine Trägereinlage aufweist.
Ferner wird z.B. auch in der DE-C-38 05 069 gefordert, daß eine Be- und Entwässerungsmatte für ein Vegetationselement eine Trägerschicht aus mechanisch verfestigtem Polyester-Nadelvlies aufweist, um einer Vernässungsgefahr entgegenzuwirken.

Andere vorbekannte Vegetationsmatten weisen Stroh-, Kokosund Vliesstoffmatten als Träger auf, die verrottungsfähig sind, während sog. Krallgewebematten als Träger demgegenüber verrottungsbeständig und zugfest sind. Die Hauptfunktion der verrottbaren Trägereinlagen besteht darin, diese Vegetationsmatten transportfähig zu machen, so daß sie nach der Anzucht aufgerollt, auf Euro-Paletten verladen und z.B. auf extremen Standorten wie Dächern oder auch Salz-, Kohle- oder Müllhalden durch einfaches Ausrollen verlegt werden können. Während die verrottbaren Trägereinlagen ihre Funktion nach der Verrottung verlieren, sollen bei den Krallgewebematten gewisse Funktionen erhalben bleiben. Die herkömmlichen, mit Träger versehenen Vegetationsmatten, sind dabei in mehrfacher Hinsicht nachteilig. Ihre Anzucht erfolgt nämlich auf einer Kunststoff-Folie oder dergleichen, die nach ein- bis zweimaliger Kultur unbrauchbar geworden ist und unter hohem finanziellen Aufwand entsorgt werden muß. Aufgrund der Verschmutzung der Kunststoff-Folie ist ein Recycling derzeit nicht möglich. Auch die verrottbaren Trägerschichten haben, damit sie eine ausreichend hohe Festigkeit für ein bis zwei Jahre aufweisen, immer noch einen nicht verrottbaren Kunststoffanteil von bis zu 30% in Form von Kunststoff-Fasern oder -Geweben. Bei sog. Vliesstoffmatten gibt es in der Anzucht Wind- und Wassererosionsprobleme, insbesondere an den Rändern, da das Vegetationsmattensubstrat lediglich auf dem Vlies aufliegt und nicht, wie es bei den Krallgewebematten der Fall ist, mit dem Träger verzahnt ist. Wenn Vliesstoffmatten z.B. auf dem Dach verlegt sind, durch den Transport jedoch Vegetationsteile oder Substrat herausgefallen sind, die nicht nachgebessert werden, besteht in diesen Bereichen eine erhöhte Wind- und Wassererosionsanfälligkeit. An diesen Stellen liegt dann das Vlies frei. Es entstehen sog. "Glatzen", an denen sich von selbst praktisch keine Vegetation mehr ansiedelt und ein Schließen der Vegetation nur mit erheblichem Pflegeaufwand möglich ist.

Der Erfindung liegt deshalb die Aufgabe zugrunde, das eingangs genannte Verfahren derart zu verbessern, daß eine längere Lager- und Transportfähigkeit gewährleistet wird und darüber hinaus eine schnellere und sauberere "Ernte", was die Randbereiche anbelangt, möglich ist. Ein Ziel der Erfindung ist es ferner, die oben erwähnten Nachteile der mit Trägereinlagen und dergleichen arbeitenden Vegetationsmatten zu vermeiden und dennoch einen hohen Anteil sukkulenter Pflanzenarten, wie Sedum, einsetzen zu können. Ein noch weiteres Ziel der Erfindung ist es, ggf. von Witterungseinflüssen bei der Anzucht, Kultivierung und dem Transport unabhängig arbeiten zu können. Darüberhinaus dürfte es natürlich ohne weiteres einleuchten, daß die angestrebte Verfahrensweise kostengünstig und umweltfreundlich sein sollte.

Diese Aufgabe und die weiter genannten Ziele werden durch das im Anspruch 1 gekennzeichnete Verfahren bzw. die Verwendung gemäß Anspruch 13 gelöst. Danach werden die Vegetationsmatten in einer stapelbaren, formstabilen Unterlage mit Randaufkantungen nicht nur kultiviert, sondern auch transportiert. Erst beim Verlegen der Vegetationsmatte wird diese von der Unterlage durch Abschieben oder Abziehen getrennt. Letzteres kann vorteilhafterweise durch eine gewisse Schrägstellung der Unterlage erzielt werden, so daß die Vegetationsmatte dann einfach von dieser durch Schwerkraft auf den endgültigen Begrünungsstandort abrutscht, wo sie endgültig anwachsen soll. Die Randaufkantungen der Unterlage sind bei der Anzucht für die Bewässerung und zur Erzeugung randfester Vegetationsmatten erforderlich. Sie können kontinuierlich vom Boden nach Art eines Backbleches ansteigen. Andererseits kann die Unterlage auch vorteilhafterweise durch ein rechteckiges, kastenartiges Behältnis mit Abstandshaltern oder Füssen gebildet werden, wobei dann eine Seite der Randaufkantungen bei der Abtrennung der Vegetationsmatte entfernt oder aus dem Weg weggeschwenkt werden müssen. Die Höhe der Randaufkantungen ist ebenfalls nicht kritisch, sondern wird nach der gewünschten Vegetationsmattendicke oder etwas größer gewählt. Sie liegt insbesondere im Bereich von 2 bis 8 cm. Im Hinblick auf die Fläche des Bodens der Unterlage sind die Randaufkantungen deshalb als flach zu bezeichnen. Die Form, Größe und das Material der erfindungsgemäß eingesetzten Unterlage ist nicht kritisch sondern kann in breitem Rahmen gewählt werden. Insbesondere ist jedoch an eine Kunststoffunterlage in der Größe von 80 x 120 cm gedacht. Insofern kann das Vegetationsmattenstück Euro-Palettenmaß aufweisen oder entsprechend kleiner gewählt werden, wodurch wiederum der Transport erleichtert wird. Die Kultivierung und der Transport von trägerlosen Vegetationsmatten in den stapelbaren, formstabilen Unterlagen bringt viele, unterschiedliche Vorteile mit sich, so werden erhebliche Produktionskosten gespart, da weder Folien noch Trägervlies benötigt werden, und ihre Entsorgung somit entfallen kann, während die Unterlage immer wiederverwendet werden kann. Die erfindungsgemäß hergestellte Vegetationsmatte ist also durch den Verzicht auf den Einsatz jeglicher Kunststoffe besonders umweltfreundlich. Auch ist die bei Rollrasen erforderliche intensive Durchwurzelung nicht mehr erforderlich.

Die erfindungsgemäß hergestellten Vegetationsmatten brauchen weder aufgerollt noch mit besonderen Haltevorrichtungen auf Euro-Paletten gestapelt zu werden, da der Transport und/oder die Lagerung vorteilhafterweise mittels übereinandergestapelter Unterlagen erfolgt. Somit entfällt das Aufrollen auf dem freien Feld und die Palettierung erfolgt direkt auf die Palettengabel des Traktors, was eine besondere Arbeitsersparnis darstellt. Darüberhinaus weisen die erfindungsgemäß hergestellten Vegetationsmatten im Gegensatz zu den gerollten Vegetationsmatten keine Beschädigungen auf, wie sie durch das Aufrollen und den Luftabschluß im aufgerollten Zustand gegeben sind. Durch das Stapeln der erfindungsgemäß eingesetzten Unterlagen sind die Vegetationsmatten während des Transports und der Lagerung keinerlei Druckbelastung ausgesetzt und ständig im Vegetationsbereich belüftet; so daß derart gestapelte und transportierte Vegetationsmatten bis zu etwa zwei Wochen übereinandergestapelt werden können.

Die Randaufkantungen der Unterlage dienen ferner dazu, Randerosionen während der Kultur und beim Transport zu vermeiden.

Durch das vorteilhafte Vorsehen von Abstandshaltern oder Füssen liegen bei der Anzucht die Vegetationsmattenträger mit Abstand zum Boden. Auf diese Weise wird der Boden nicht versiegelt und das Niederschlagswasser kann problemlos unterhalb der Vegetationsmattenträger versickern.

Da der Bodenanschluß fehlt, kann Fremdaufwuchs, der sich wie bisher in den Fahrspuren zwischen den Vegetationsmatten gebildet hat, nicht in die Vegetationsmatte einwachsen. Hierdurch entfallen der Herbizideinsatz oder das Beseitigen dieser Fremdvegetation durch Schnittmaßnahmen.

Im folgenden wird die Anzucht verschiedener beispielhafter Vegetationsmatten 10 zum besseren Verständnis der Erfindung beschrieben:

Auf die aus Kunststoff, Holz oder Metall bestehende Unterlage 12 mit einem plattenartigen Boden, der eine glatte Oberfläche und zur Versteifung an der Unterseite z.B. Rippen aufweist, werden aufgebracht:
ein dem jeweiligen Verwendungszweck und der Vegetationszusammensetzung entsprechendes Substrat,
Pflanzenteile (Sprosse) von für die jeweilige Aufgabenstellung der Vegetationsmatten 10 geeigneten Pflanzen, z.B. Sukkulenten und Moose, sowie
Saatgut von geeigneten Kräutern und Gräsern.

Je nach angestrebter Vegetation gibt es verschiedene Vegetationsmatten-Typen, die man grob wie folgt einteilen kann:
1. Reine Sedum/Moos-Vegetationsmatten 10. Diese Matten sind dadurch gekennzeichnet, daß sie überwiegend aus Sedum bestehen. Ein geringer Moosanteil der Matten entsteht z.B. durch anfliegende Moossporen oder wird durch Ausstreuen von Moosteilen aufgebracht.
2. Sedum/Kraut/Gras-Vegetationsmatten 10. Hierbei nimmt der Sedumanteil noch ca. 50 bis 60 % der projektiven Vegetationsdeckung ein. Die Gräser und Kräuter erhöhen die Festigkeit der Vegetationsmatte 10. Die Moosvegetation ist möglich und in geringen Anteilen erwünscht.
   Je nach Standort, auf dem die Matte später verbracht werden soll, erfolgt die Zusaat der Gräser und Kräuter entweder direkt mit der Aussaat und dem Ausstreuen von Sedumsprossen oder (z.B. bei Substratschichtdicken auf dem Dach unter 6 cm wenige Wochen vor der Auslieferung).
3. Gras/Kraut-Vegetationsmatten 10 mit Sedumanteilen.
   Diese Vegetationsmatten sind für Vegetationsschichtdicken ab 15 cm auf dem Dach geeignet, wobei der Sedumanteil dieser Matten mindestens 30% aufweist.

Eine gewünschte Anzahl von Unterlagen 12 wird pressgestossen verlegt, so daß sie während der Kulturzeit, z.B. zur Pflege, begangen oder befahren werden können.

Durch die Fugen der Unterlagen 12 gelangt in Verbindung mit ihren Füssen oder Abstandshaltern 18 und dem durch diese gebildeten Luftraum zwischen Unterlage 12 und dem gewachsenen Boden überschüssiges Niederschlags- oder Beregnungswasser in das Erdreich. Dadurch wird temporäres Vernässen, eventuelles Aufschwimmen der Vegetationsmatten 10 oder Wassererosion verhindert.

Die im Keim- und Jugendstadium in der Regel gegen Trockenheit, Sonne und Wind sehr empfindlichen Pflanzen werden unmittelbar nach dem Verlegen auf dem Feld ganzflächig mit "Schattiergewebe" abgedeckt. Je nach Vegetationsentwicklung und Jahreszeit bleibt dieses Schattiergewebe einige Wochen oder Monate auf der Kultur.

Bei trockenem Wetter wird in Anpassung an den Wasserbedarf der Kultur in kürzeren Intervallen und mit geringeren Einzelgaben als bei Kulturen auf gewachsenem Boden beregnet, da die relativ geringe Substratschicht entsprechend weniger Wasser festzuhalten vermag. Das zuvor beschriebene Schattiergewebe schränkt die durch Sonnenschein und Wind verursachte Wasser-Verdunstung ein.

Mittels harmonischer Versorgung mit Wasser und Nährstoffen wird die Vegetationsentwicklung bewirkt. Gezieltes Variieren dieser Faktoren, nachdem die gewünschte Vegetationsentwicklung erreicht ist, führt zu Streßsituationen, durch die eine Optimierung der Vitalität der Pflanzen für die künftigen Extremstandorte erfolgt.

Das erfindungsgemäße Verfahren kann natürlich auch mit besserer Wuchsleistung im Gewächshaus bei kontrollierter Bewässerung und Temperaturführung durchgeführt werden.

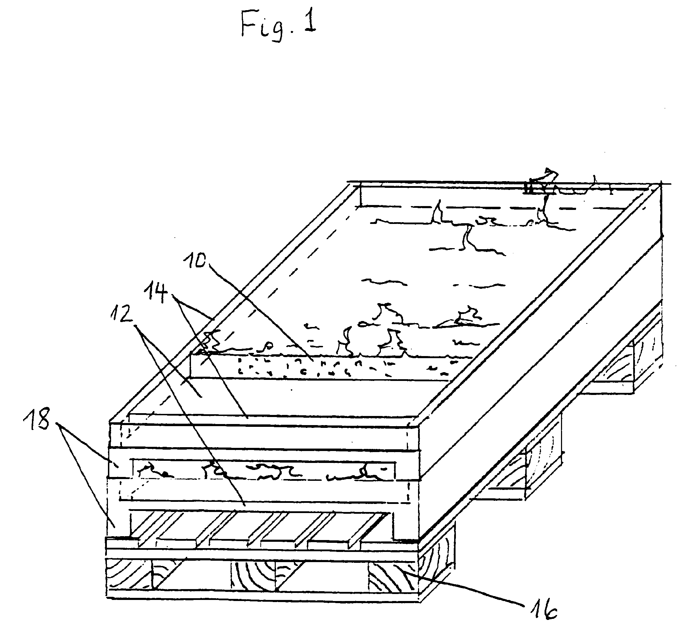

Bei der Ernte bzw. zur Verladung der vollentwickelten Vegetationsmatten 10 werden die Unterlagen 12 mit der darin kultivierten Vegetation von Hand auf die Palettengabel eines nebenherfahrenden Ladegerätes gestapelt. Durch entsprechende Ausbildung der Unterlage 12 mit Randaufkantungen 14 und Füßen oder Abstandshaltern 18, sind sie mit fertiger Vegetation stapel- und transportierbar; wie dieses in Fig. 1 anhand von zwei auf einer Euro-Palette 16 gestapelter Unterlagen 12 gezeigt ist, ohne die Vegetation durch Drücken, Rollen, Licht- oder Luftmangel zu beschädigen. Entgegen gerollt gelieferten Vegetationsmatten können diese infolge Luft- und Lichtzuganges im Stapel erheblich länger transportiert und zwischengelagert werden.

Zum Verlegen der Vegetationsmatten 10 werden diese samt ihrer Unterlage 12; z.B. auf ein Dach, transportiert. Durch Schrägstellen der plattenartigen Unterlage läßt man die trägerlose Vegetationsmatte 10 auf die vorgesehene Fläche abgleiten. Bei dieser Art der Verlegung evtl. entstehende Einrisse sind unproblematisch, da die Vegetation innerhalb weniger Tage hebefest einwurzelt, wobei Randbereiche nicht nachgearbeitet werden müssen, da die Vegetationsmatten 10 pressgestossen verlegt werden.

## Patentansprüche

1. Verfahren zum Herstellen einer trägerlosen Vegetationsmatte (10), insbesondere zur Dachbegrünung, umfassend Erdsubstrat und Pflanzen mit Wurzeln oder Moose, dadurch gekennzeichnet, daß eine stapelbare, formstabile Unterlage (12) mit Randaufkantungen (14) vorgesehen wird, in der die Vegetationsmatte (10) kultiviert, transportiert und beim Verlegen von dieser durch Abschieben oder Abziehen getrennt wird.

2. Verfahren nach Anspruch 1, dadurch gekennzeichnet, daß die Unterlage (12) bei der Anzucht vom natürlichen oder künstlichen Boden beabstandet gehalten wird.

3. Verfahren nach Anspruch 1, dadurch gekennzeichnet, daß die Unterlage (12) mehrfach oder vielfach wiederverwendet wird.

4. Verfahren nach Anspruch 1 bis 3, dadurch gekennzeichnet, daß die Beschickung der Unterlage (12) mit Erdsubstrat, Saatgut und Pflanzenteilen oder Moosen, unabhängig vom Ort der Kultivierung, insbesondere in einer Halle, erfolgt.

5. Verfahren nach Anspruch 1 bis 4, dadurch gekennzeichnet, daß die Anzucht im Gewächshaus, in einer Vegetationshalle oder auf freiem Feld durchgeführt wird.

6. Verfahren nach Anspruch 1 bis 5, dadurch gekennzeichnet, daß mehrere Unterlagen (12) pressgestossen nebeneinander gelagert werden.

7. Verfahren nach Anspruch 1 bis 6, dadurch gekennzeichnet, daß der Transport und/oder die Lagerung mittels gestapelter Unterlagen (12) durchgeführt wird.

8. Verfahren nach Anspruch 1 bis 7, dadurch gekennzeichnet, daß man die Unterlage (12) mit kultivierter Vegetationsmatte (10) zum Verlegungsort transportiert und dort die Matte durch Schrägstellung auf den endgültigen Begrünungsstandort abgleiten läßt.

9. Verfahren nach einem oder mehreren der vorstehenden Ansprüche 1 bis 8, dadurch gekennzeichnet, daß die Unterlage (12) durch ein rechteckiges, kastenartiges Behältnis mit ebenem Boden und Füßen oder Abstandshaltern (18) gebildet wird, wobei die Randaufkantungen (14) vom Boden wegschwenkbar und/oder trennbar sind.

10. Verfahren nach einem oder mehreren der vorstehenden Ansprüche 1 bis 9, dadurch gekennzeichnet, daß die Höhe der Randaufkantung (14) der gewünschten Vegetationsmatten-Dicke entsprechend oder etwas größer vorgesehen wird.

11. Verfahren nach einem oder mehreren der vorstehenden Ansprüche 1 bis 10, dadurch gekennzeichnet, daß die Vegetationsmatte einen Anteil von schwach wurzelnden Pflanzen, insbesondere Sedumarten, bis annähernd 100% projektiver Deckung aufweist.

12. Verfahren nach einem oder mehreren der vorstehenden Ansprüche 1 bis 11, dadurch gekennzeichnet, daß überschüssiges Niederschlags- oder Beregnungswasser durch Fugen der pressgestossen verlegten Unterlagen (12) und durch den mittels Abstandshaltern bestehenden Luftraum zwischen Unterlage (12) und dem gewachsenen Boden in das Erdreich geführt wird.

13. Verwendung einer stapelbaren, formstabilen Unterlage (12) mit Randaufkantungen (14) zum Kultivieren und Transportieren einer trägerlosen Vegetationsmatte, insbesondere zur Dachbegrünung, umfassend Erdsubstrat und Pflanzen mit Wurzeln oder Moose, die beim Verlegen durch Abschieben oder Abziehen von der Unterlagen getrennt wird.

## Revendications

1. Procédé pour la fabrication d'une natte végétale sans support (10) particulièrement adaptée au gazonnement des toits, comprenant des substrats de terre et des plantes à racines ou des mousses, caractérisé par le fait qu'un socle superposable de forme stable (12) avec des bords placés de chant (14) est prévu, dans lequel la natte végétale (10) est cultivées, transporté et d'où cette même natte est retirée au moment de sa pose en la faisant reculer ou en la tirant.

2. Conformément à la revendication 1, procédé caractérisé par le fait que lors de la plantation, le socle (12) est tenu à l'écart du sol naturel ou artificiel.

3. Conformément à la revendication 1, procédé caractérisé par le fait que le socle (12) est utilisé à plusieurs reprises ou souvent.

4. Conformément aux revendications 1 à 3, procédé caractérisé par le fait que l'alimentation du socle (12) en substrat de terre, en semences et en pousses ou en mousses se produit indépendamment du lieu de culture, principalement dans un hall.

5. Conformément aux revendications 1 à 4, procédé caractérisé par le fait que la plantation est effectuée dans une serre, dans un hall botanique ou en plein air.

6. Conformément aux revendications 1 à 5, procédé caractérisé par le fait que plusieurs socles (12) sont pressés bout à bout et stockés les uns à côté des autres.

7. Conformément aux revendications 1 à 6, procédé caractérisé par le fait que le transport et/ou le stockage est effectué à l'aide de socles (12) superposés.

8. Conformément aux revendications 1 à 7, procédé caractérisé par le fait que l'on transporte le socle (12) avec la natte végétale cultivée (10) jusqu'à son lieu de pose et que l'on y fait glisser la natte jusqu'au lieu final de gazonnement en l'inclinant.

9. Conformément à l'une ou à plusieurs des revendications 1 à 8, procédé caractérisé par le fait que le socle est formé par un récipient rectangulaire, similaire à une caisse avec un fond plat et des pieds ou des écarteurs (18) et qu'il est possible de faire pivoter et/ou de séparer du sol les bords placés de chant (14).

10. Conformément à l'une ou à plusieurs des revendications 1 à 9, procédé caractérisé par le fait que la hauteur des bords placés de chant (14) est prévue de sorte à correspondre ou à être légèrement supérieure à l'épaisseur des nattes végétales.

11. Conformément à l'une ou à plusieurs des revendication 1 à 10, procédé caractérisé par le fait que la natte végétale comprend une part de plantes ayant peu de racines, particulièrement des espèces de sedum, pouvant atteindre près de 100% de sa couverture projective.

12. Conformément à l'une ou à plusieurs des revendications 1 à 11, procédé caractérisé par le fait que l'eau de pluie et l'eau d'arrosage excédentaires s'infiltrent dans la terre par les joints des socles (12) mis bout à bout et par l'espace créé par les écarteurs entre le socle (12) et le terrain ferme.

13. Utilisation d'un socle (12) superposable, de forme stable muni de bords placés de chant (14) pour la culture et le transport d'une natte végétale sans support, destinée tout particulièrement au gazonnement des toits, comprenant du substrat de terre et des plantes à racines ou des mousses, qui, lors de sa pose, est retirés des socles en la faisant reculer ou en la tirant.

## Claims

1. Process for producing a support-free vegetation mat (10), particularly for roof greening, comprising an earth substrate and plants with roots or moss, characterized in that a stackable, dimensionally stable substrate (12) with raised edges (14) is provided, in which the vegetation mat (10) is cultivated and transporting and on laying the latter is separated therefrom by sliding or drawing off.

2. Process according to claim 1, characterized in that during growing the substrate (12) is kept away from natural or artificial soil.

3. Process according to claim 1, characterized in that the substrate (12) can be used a number of times.

4. Process according to claims 1 to 3, characterized in that the provision of the substrate (12) with soil substrate, seed and plant parts or moss, takes place independently of the cultivation point and in particular in a building.

5. Process according to claims 1 to 4, characterized in that growing takes place in a greenhouse, a vegetation building or in the open.

6. Process according to claims 1 to 5, characterized in that several substrates (12) in press-planted manner are stored in juxtaposed form.

7. Process according to claims 1 to 6, characterized in that the transportation and/or storage takes place by means of stacked substrates (12).

8. Process according to claims 1 to 7, characterized in that the substrate (12) together with the cultivated vegetation mat (10) is transported to the laying location and there the mat is allowed to slide onto the final greening location by inclining.

9. Process according to one or more of the preceding claims 1 to 8, characterized in that the substrate (12) is formed by a rectangular, box-like container with a flat bottom and feet or spacers (18), the raised edges (14) being pivotable away and/or separable from the base.

10. Process according to one or more of the preceding claims 1 to 9, characterized in that the height of the raised edge (14) is in accordance with or somewhat larger than the desired vegetation mat thickness.

11. Process according to one or more of the preceding claims 1 to 10, characterized in that the vegetation mat has a proportion of weekly rooting plants, particularly sedum species, to an approximately 100% projective coverage.

12. Process according to one or more of the preceding claims 1 to 11, characterized in that excess precipitated or rain water is passed into the soil through the joints of the press-planted, laid substrates (12) and the air space provided by means of the spacers between the substrate (12) and the cultivated ground.

13. Use of a stackable, dimensionally stable substrate (12) with raised edges (14) for the cultivation and transportation of a support-free vegetation mat, particularly for roof greening, comprising an earth substrate and plants with roots or moss, which on laying is separated from the substrates by sliding or drawing off.
